(19) Europäisches Patentamt / European Patent Office / Office européen des brevets

(11) **EP 4 060 566 B1**

(12) **EUROPEAN PATENT SPECIFICATION**

(45) Date of publication and mention of the grant of the patent:
**18.02.2026 Bulletin 2026/08**

(21) Application number: **21205200.5**

(22) Date of filing: **28.10.2021**

(51) International Patent Classification (IPC):
**G06N 3/082** (2023.01)    **G06N 3/0455** (2023.01)
**G06N 3/0499** (2023.01)    **G06N 3/09** (2023.01)

(52) Cooperative Patent Classification (CPC):
**G06N 3/082; G06N 3/0455; G06N 3/0499; G06N 3/09**

(54) **METHOD AND APPARATUS FOR PROCESSING INFORMATION, STORAGE MEDIUM, ELECTRONIC DEVICE AND COMPUTER PROGRAM PRODUCT**

VERFAHREN UND VORRICHTUNG ZUR VERARBEITUNG VON INFORMATIONEN, SPEICHERMEDIUM, ELEKTRONISCHE VORRICHTUNG UND COMPUTERPROGRAMMPRODUKT

PROCÉDÉ ET APPAREIL DE TRAITEMENT D'INFORMATIONS, SUPPORT DE STOCKAGE, DISPOSITIF ÉLECTRONIQUE ET PRODUIT-PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2021 CN 202110277986**

(43) Date of publication of application:
**21.09.2022 Bulletin 2022/38**

(73) Proprietors:
• **Beijing Xiaomi Mobile Software Co., Ltd.**
  **Beijing 100085 (CN)**
• **Beijing Xiaomi Pinecone Electronics Co., Ltd.**
  **Beijing 100085 (CN)**

(72) Inventor: **SUN, Yuhui**
**Beijing, 100085 (CN)**

(74) Representative: **dompatent**
**Partnerschaft von Patentanwälten und Rechtsanwälten mbB**
**Deichmannhaus am Dom**
**Bahnhofsvorplatz 1**
**50667 Köln (DE)**

(56) References cited:
**US-A1- 2019 370 658**

• **KAUR AMREEN ET AL: "Inpainting of Irregular Holes in a Manuscript using UNet and Partial Convolution", 2020 SECOND INTERNATIONAL CONFERENCE ON INVENTIVE RESEARCH IN COMPUTING APPLICATIONS (ICIRCA), IEEE, 15 July 2020 (2020-07-15), pages 778 - 784, XP033817912, DOI: 10.1109/ ICIRCA48905.2020.9182917**
• **MINJIA ZHANG ET AL: "Accelerating Training of Transformer-Based Language Models with Progressive Layer Dropping", ARXIV.ORG, CORNELL UNIVERSITY LIBRARY, 201 OLIN LIBRARY CORNELL UNIVERSITY ITHACA, NY 14853, 26 October 2020 (2020-10-26), XP081798113**
• **SERGEY IOFFE ET AL: "Batch Normalization: Accelerating Deep Network Training by Reducing Internal Covariate Shift", PROCEEDINGS OF MACHINE LEARNING RESEARCH (PMLR), PROCEEDINGS OF THE INTERNATIONAL CONFERENCE ON MACHINE LEARNING (ICML 2015), vol. 37, 7 July 2015 (2015-07-07), pages 448 - 456, XP055490336**
• **NICA ANDREI CRISTIAN ET AL: "Learning to Maximize Return in a Stag Hunt Collaborative Scenario through Deep Reinforcement Learning", 2017 19TH INTERNATIONAL SYMPOSIUM ON SYMBOLIC AND NUMERIC ALGORITHMS FOR SCIENTIFIC COMPUTING (SYNASC), IEEE, 21 September 2017 (2017-09-21), pages 188 - 195, XP033442963, DOI: 10.1109/SYNASC.2017.00039**

## Description

## TECHNICAL FIELD

The present disclosure relates to the technical field of deep learning, and in particular to a method and an apparatus for processing information, a storage medium, an electronic device and a computer program product.

## BACKGROUND

With development of a deep learning technology, a deep learning model is widely used in a plurality of technical fields such as natural language processing, image processing and data mining. In the deep learning model, output of a module included in the model can be normalized by setting a corresponding normalization structure so as to improve an effect of model training. However, in a model prediction phase, the normalization structure prolongs the delay of model prediction. In order to shorten the delay of model prediction, the normalization structure in the deep learning model needs to be removed during model training.

In the related art, if the normalization structure in the deep learning model is removed in a training process, the stability of model training may be influenced, even the model cannot be normally trained, the quality of the trained model is poor, and the accuracy of information output by the model is reduced. US 2019/370658 A1 (XIE BIKE [US] ET AL) describes removing batch normalization layers in the network during a self-tuning compression process.

KAUR AMREEN ET AL: "Inpainting of Irregular Holes in a Manuscript using UNet and Partial Convolution",2020 SECOND INTERNATIONAL CONFERENCE ON INVENTIVE RESEARCH IN COMPUTING APPLICATIONS (ICIRCA), IEEE, 15 July 2020 (2020-07-15), pages 778-784, DOI: 10.1109/ICIRCA48905.2020.9182917 describes performing image inpainting of irregular holes in old handwritten manuscripts using a U Net architecture and disables batch normalization layers during training.

## SUMMARY

The invention is defined by the appended independent claims. Embodiments of the invention are defined by the appended dependent claims.

## BRIEF DESCRIPTION OF THE DRAWINGS

The accompanying drawings, which are incorporated in and constitute a part of this specification, illustrate examples consistent with the disclosure and together with the specification serve to explain the principles of the disclosure.

Fig. 1 is a flow chart illustrating a method for processing information according to one or more examples of the present disclosure.
Fig. 2 is a flow chart illustrating a method for training processing model according to one or more examples of the present disclosure.
Fig. 3 is a flow chart of step 202 according to the example shown in Fig. 2.
Fig. 4 is a block diagram illustrating an apparatus for processing information according to one or more examples of the present disclosure.
Fig. 5 is a block diagram illustrating an electronic device according to one or more examples of the present disclosure.

## DETAILED DESCRIPTION

Terms used in the present disclosure are merely for describing specific examples and are not intended to limit the present disclosure. The singular forms "one", "the", and "this" used in the present disclosure are also intended to include a multiple form, unless other meanings are clearly represented in the context. It should also be understood that the term "and/or" used in the present disclosure refers to any or all of possible combinations including one or more associated listed items.

Reference throughout this specification to "one embodiment," "an embodiment," "an example," "some embodiments," "some examples," or similar language means that a particular feature, structure, or characteristic described is included in at least one embodiment or example. Features, structures, elements, or characteristics described in connection with one or some embodiments are also applicable to other embodiments, unless expressly specified otherwise.

It should be understood that although terms "first", "second", "third", and the like are used in the present disclosure to describe various information, the information is not limited to the terms. These terms are merely used to differentiate information of a same type. For example, without departing from the scope of the present disclosure, first information is also referred to as second information, and similarly the second information is also referred to as the first information. Depending on the context, for example, the term "if" used herein may be explained as "when" or "while", or "in response to ..., it is determined that".

The terms "module," "sub-module," "circuit," "sub-circuit," "circuitry," "sub-circuitry," "unit," or "sub-unit" may include memory (shared, dedicated, or group) that stores code or instructions that can be executed by one or more processors. A module may include one or more circuits with or without stored code or instructions. The module or circuit may include one or more components that are directly or indirectly connected. These components may or may not be physically attached to, or located adjacent to, one another.

A unit or module may be implemented purely by software, purely by hardware, or by a combination of hardware and software. In a pure software implementation, for example, the unit or module may include functionally related code blocks or software components, that are directly or indirectly linked together, so as to perform a particular function.

Before describing a method and an apparatus for processing information provided by the present disclosure, application scenarios related to various examples of the present disclosure are first described. The application scenarios may be scenarios in which a preset model provided with normalization structures is trained to acquire a processing model. After to-be-processed information is input into the processing model, the processing model may output target information corresponding to the to-be-processed information according to the learned inherent law and the representation level of training data. In the model prediction phase, the normalization structures may prolong the delay of model prediction. In order to shorten the delay of model prediction, the normalization structures in the preset model need to be removed in the training process.

In the related art, when a preset model starts to be trained, the normalization structures in the preset model may be removed by adjusting initialization, scaling and biasing operations, and the normalization structures in the preset model may also be removed by adding a learnable parameter before residual connection or in each item of residual connection included in the preset model. However, the above methods are all based on proof derivation, the proof derivation is in fact incomplete, and there are problems that it cannot be reproduced practically and the training of the preset model is unstable. In addition, even if training of the preset model can be completed, the quality of a processing model acquired after removing the normalization structures in the preset model is poor, which affects the accuracy of target information output by the processing model.

If the normalization structure in the deep learning model is removed in a training process, the stability of model training may be influenced, even the model cannot be normally trained, the quality of the trained model is poor, and the accuracy of information output by the model is reduced.

In order to solve the problems in the related art, a specified number of normalization structures in a preset model are gradually removed according to a target probability or a number of training steps so as to acquire a processing model, so that the training of the preset model is not interfered, the training stability of the preset model is high, the quality of the processing model can be ensured, and the accuracy of the target information is improved.

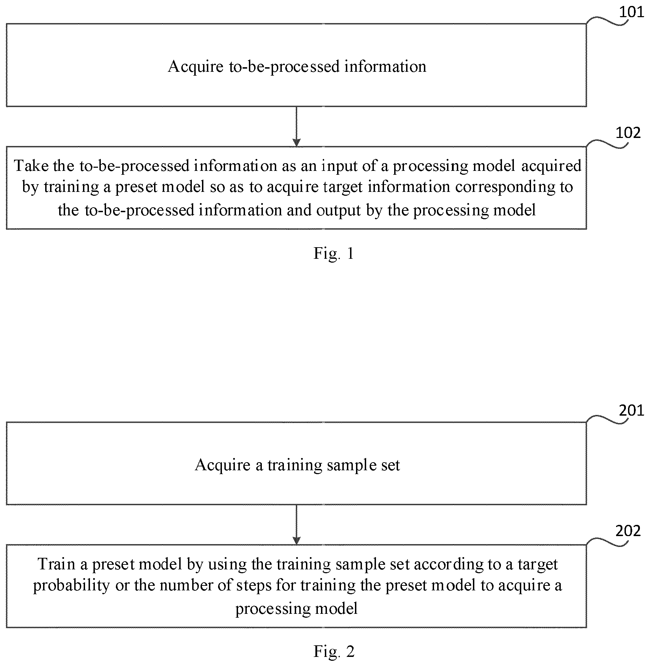

Fig. 1 is a flow chart illustrating a method for processing information according to an example of the present disclosure. As shown in Fig. 1, the method may include the following steps.

In step 101, to-be-processed information is acquired, wherein the to-be-processed information is an image.

In step 102, the to-be-processed information is taken as an input of a processing model acquired by training a preset model so as to acquire target information corresponding to the to-be-processed information and output by the processing model, wherein the target information may reflect specified features included in the to-be-processed information.

The preset model includes a plurality of operation modules and a plurality of normalization structures, wherein one of the plurality of normalization structures corresponds to one of the plurality of operation modules, the normalization structure is configured to normalize an output of the corresponding operation module, and the processing model is acquired by removing a specified number of normalization structures according to a target probability or the number of steps for training the preset model in the process of training the preset model.

For example, in the technical field of image processing the preset model includes the plurality of operation modules and a plurality of normalization structures, wherein one of the plurality of normalization structures corresponds to one of the plurality of operation modules needs to be set according to actual applications, and the preset model is trained to acquire the required processing model. Each normalization structure is configured to normalize the output of the corresponding operation module, so that the output of the operation module obeys standard Gaussian distribution, training of the preset model is stable, a higher learning rate is realized, the model convergence is accelerated, and the generalization capability is improved. The normalization process is Layer Normalization (LN) operations.

In order to ensure the quality of the processing model while removing the specified number of normalization structures in the preset model, the preset model may be gradually adapted to the process without the normalization structures based on the idea that the normalization structures in the preset model are gradually removed from simplicity to difficulty when the preset model is trained. For example, the preset model is trained to converge under the condition that the plurality of normalization structures are reserved, then some of the normalization structures are removed according to the target probability (the target probability may be, for example, 0.2), the preset model is trained to converge, then the target probability may be increased, the above steps are repeated until the specified number of normalization structures are removed according to the target probability, and the preset model with the specified number of normalization structures removed is trained to converge so as to acquire the processing model. For another example, the number of normalization structures to be removed may be gradually increased as the number of the steps for training the preset model increases until the specified number of normalization structures are removed, and the processing model is acquired. The preset model is trained according to the above approach, the training process is simple, the reliability and the universality are high, the accuracy of the processing model can be ensured, and the processing model acquired by removing the specified number of normalization structures achieves the effect of having the same quality as a processing model acquired by not removing the normalization structures.

Further, after the processing model is acquired, the to-be-processed information may be acquired and input into the processing model to acquire the target information output by the processing model. The target information reflects the specified features included in the to-be-processed information.

In summary, according to the present disclosure, the to-be-processed information is acquired and taken as the input of the processing model acquired by training the preset model so as to acquire the target information corresponding to the to-be-processed information and output by the processing model, wherein the to-be-processed is an image, the target information reflects the specified features included in the to-be-processed information, the preset model includes the plurality of operation modules and a plurality of normalization structures, wherein one of the plurality of normalization structures corresponds to one of the plurality of operation modules, the normalization structure is configured to normalize the output of the corresponding operation module, and the processing model is acquired by removing the specified number of normalization structures according to the target probability or the number of the steps for training the preset model in the process of training the preset model. The specified number of normalization structures in the preset model are gradually removed according to the target probability or the number of the steps for training the preset model so as to acquire the processing model, so that the training of the preset model cannot be interfered, the training stability of the preset model is high, the quality of the processing model can be ensured, and the accuracy of the target information is improved.

Fig. 2 is a flow chart illustrating a method for training processing model according to an example of the present disclosure. As shown in Fig. 2, the processing model is trained in the following manner.

In step 201, a training sample set is acquired.

The training sample set includes a plurality of groups of training data, each group of training data includes: input end training data and corresponding output end training data, the input end training data includes first training information, and the output end training data includes second training information corresponding to the first training information.

In step 202, the preset model is trained by using the training sample set according to the target probability or the number of steps for training the preset model to acquire the processing model.

Optionally, when the preset model is trained, the training sample set including the plurality of groups of training data can be obtained firstly, wherein each group of training data consists of the input end training data including the first training information and the output end training data including the second training information. Then, according to the target probability or the number of the steps for training the preset model, the whole data of the training sample set are adopted to perform multiple times of complete training (i.e. training of a plurality of Epochs) on the preset model so as to acquire the processing model. Each group of training data may be understood as a Batch of data divided from the training sample set. The training process of the preset model may be completed on a terminal or a server, for example, the preset model may be trained on a graphics processing unit (GPU) of the server.

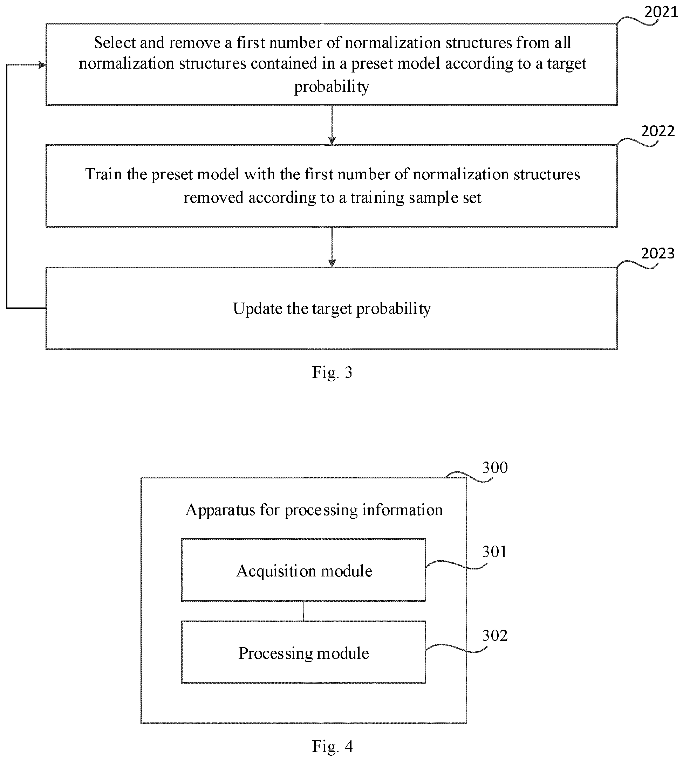

Fig. 3 is a flow chart of step 202 according to the example shown in Fig. 2. As shown in Fig. 3, step 202 may include the following steps.

In step 2021, a first number of normalization structures are selected and removed from the plurality of normalization structures contained in the preset model according to the target probability.

In step 2022, the preset model with the first number of normalization structures removed is trained according to the training sample set.

In one scenario, firstly the preset model may be trained to converge under the condition that the plurality of normalization structures are reserved. Then, in each step for training the preset model according to the training sample set, a first number of normalization structures are randomly selected and removed from the plurality of normalization structures included in the preset model according to the target probability until the preset model is trained to converge, so that the generalization capability of the preset model is enhanced, the model convergence is accelerated, and the preset model does not depend on the normalization structures as much as possible. For example, when the preset model includes five normalization structures, if the target probability p is 0.2, then the first number is $5 \times 0.2 = 1$, one normalization structure is removed, namely the normalization processing corresponding to this normalization structure is skipped in the process of training the preset model. It should be noted that in each step for training the preset model, the first number of normalization structures removed may be different. The condition for training the preset model to converge may be as follows: a loss function of the preset model is stabilized in a preset interval, so that fluctuation of the loss function is small.

In step 2023, the target probability is updated, wherein the updated target probability is greater than the target probability before updating.

The steps 2021 to 2023 are repeatedly executed until the specified number of normalization structures are removed so as to acquire the processing model.

Further, the target probability may be updated according to a preset proportionality coefficient so as to be increased, namely the first number is increased. For example, in the case where the proportionality coefficient is 2, if the target probability is 0.2, the updated target probability is 0.4, at the moment, the process of updating the target probability can be expressed using p'= 2p, wherein p' is the updated target probability and p is the target probability before updating. Or, the target probability may be updated according to a preset function, which may be, for example, any function capable of increasing the target probability, which is not specifically limited in the present disclosure.

Then, the above steps may be repeatedly executed until the specified number of normalization structures are removed according to the target probability, and the preset model after the specified number of normalization structures are removed is trained to converge to acquire the processing model. The specified number may be set according to a preset probability threshold value, and if the target probability is greater than or equal to the probability threshold value, the specified number of normalization structures are removed when the preset model is trained. For example, when all of the normalization structures need to be removed, the probability threshold value may be set to 1, and if the target probability is greater than or equal to 1, the plurality of normalization structures in the preset model are removed.

It should be noted that by training the preset model to converge according to each target probability, the accuracy of the trained processing model can be ensured. In addition, the step-by-step increase process of the target probability may be understood as a process in which the preset model firstly learns relatively simple standard Gaussian distribution with the assistance of the normalization structures, and then gradually removes the assistance of the normalization structures to learn distribution with high difficulty.

Optionally, step 202 may be implemented in the following manner: the preset model is trained through a preset training step according to the training sample set and the number of the steps for training the preset model until the specified number of normalization structures are removed so as to acquire the processing model.

In another scenario, the preset model may be trained through the preset training steps according to the training sample set and the number of the steps for training the preset model, so that the number of the normalization structures to be removed is gradually increased along with the increase of the number of the steps for training the preset model until the specified number of normalization structures are removed to acquire the processing model. The preset training step may include the following steps: firstly, when the number of the steps for training the preset model according to the training sample set is N, a target variance is determined according to N, wherein N is a natural number. For example, the target variance may be determined by a first formula, wherein the first formula may be, for example,

$$var = \sqrt{N}$$

, and var is the target variance. Then for each operation module, whether to remove the normalization structure corresponding to the operation module may be determined based on a current variance output by the operation module (i.e., the variance output by the operation module when the number of the steps for training is N) and the target variance. The manner in which the variance output by each operation module is calculated may be referred to description in the related art, which will not be described in detail in the present disclosure.

If the variance output by the operation module is less than or equal to the target variance, the normalization structure corresponding to the operation module is removed. If the variance output by the operation module is greater than the target variance, the normalization structure corresponding to the operation module is reserved. Through the above-described approach, when the number of the steps for training the preset model is small, the target variance is small, and more normalization structures may be reserved. As the number of the steps for training the preset model increases, the target variance gradually increases, more and more normalization structures are removed until the specified number of normalization structures are removed, and the processing model is acquired.

Optionally, the preset model includes an encoder and a decoder, the encoder is composed of a second number of operation modules, the decoder is composed of a third number of operation modules, and the operation modules are attention networks or feedforward neural networks.

For example, when the preset model is a deep learning model using a Transformer structure, the preset model may include the encoder and the decoder, the encoder includes a second number of operation layers, and each operation layer of the encoder consists of an attention network executing Multi-Head Attention operations and a feedforward neural network. The decoder includes a third number of operation layers, and each operation layer of the decoder consists of an attention network executing Masked Multi-Head Attenuation operations, an attention network executing Multi-Head Attenuation operations and a feedforward neural network. Each operation module (attention network or feedforward neural network) corresponds to one normalization structure respectively, then each operation layer of the encoder corresponds to two normalization structures, and each operation layer of the decoder corresponds to three normalization structures, wherein the second number and the third number may be the same or different, which is not specifically limited in the present disclosure.

Fig. 4 is a block diagram illustrating an apparatus for processing information according to an example of the present disclosure. As shown in Fig. 4, the apparatus for processing information 300 includes an acquisition module 301 and a processing module 302.

The acquisition module 301 is configured to acquire to-be-processed information, wherein the to-be-processed information is an image.

The processing module 302 is configured to take the to-be-processed information as an input of a processing model acquired by training a preset model so as to acquire target information corresponding to the to-be-processed information and output by the processing model, wherein the target information may reflect specified features included in the to-be-processed information.

The preset model includes a plurality of operation modules and a plurality of normalization structures, wherein one of the plurality of normalization structures corresponds to one of the plurality of operation modules, and the normalization structure is configured to normalize an output of the corresponding operation module; and the processing model is acquired by removing a specified number of normalization structures according to a target probability or the number of steps for training the preset model in the process of training the preset model.

Optionally, the processing module 302 is configured to train the processing module in the following manner: a training sample set is acquired, wherein the training sample set includes a plurality of groups of training data, each group of training data includes input end training data and corresponding output end training data, the input end training data includes first training information, and the output end training data includes second training information corresponding to the first training information; and the preset model is trained by using the training sample set according to the target probability or the number of the steps for training the preset model to acquire the processing model.

Optionally, the processing module 302 is configured to select and remove a first number of normalization structures from the plurality of normalization structures contained in the preset model according to the target probability; train the preset model with the first number of normalization structures removed according to the training sample set; update the target probability, wherein the updated target probability is greater than the target probability before updating; and repeatedly execute steps of selecting and removing the first number of normalization structures from the plurality of normalization structures contained in the preset model according to the target probability to updating the target probability until the specified number of normalization structures are removed, so as to acquire the processing model.

Optionally, the processing module 302 is configured to update the target probability according to a preset proportionality coefficient; or update the target probability according to a preset function.

Optionally, the processing module 302 is configured to train the preset model through a preset training step according to the training sample set and the number of the steps for training the preset model until the specified number of normalization structures are removed so as to acquire the processing model.

Optionally, the preset training step includes when the number of the steps for training the preset model according to the training sample set is N, a target variance is determined according to N, wherein N is a natural number; whether to remove the normalization structure corresponding to the operation module is determined according to a variance output by each current operation module and the target variance; for each operation module, whether to remove the normalization structure corresponding to the operation module is determined based on a current variance output by the operation module and the target variance; if the variance output by the operation module is less than or equal to the target variance, the normalization structure corresponding to the operation module is removed; and if the variance output by the operation module is greater than the target variance, the normalization structure corresponding to the operation module is reserved.

Optionally, the preset model includes an encoder and a decoder, the encoder is composed of a second number of operation modules, the decoder is composed of a third number of operation modules, and the operation modules are attention networks or feedforward neural networks.

With regard to the apparatus in the above-described example, the specific manner in which the various modules perform operations has been described in detail in the examples of the method, which will not be described in detail herein.

In summary, the specified number of normalization structures in the preset model are gradually removed according to the target probability or the number of the steps for training the preset model so as to acquire the processing model, so that the training of the preset model is not interfered, the training stability of the preset model is high, the quality of the processing model can be ensured, and the accuracy of the target information is improved.

The present disclosure further provides a computer readable storage medium, which stores computer program instructions thereon; and the program instructions, when executed by a processor, implement the steps of the method for processing information provided by the present disclosure.

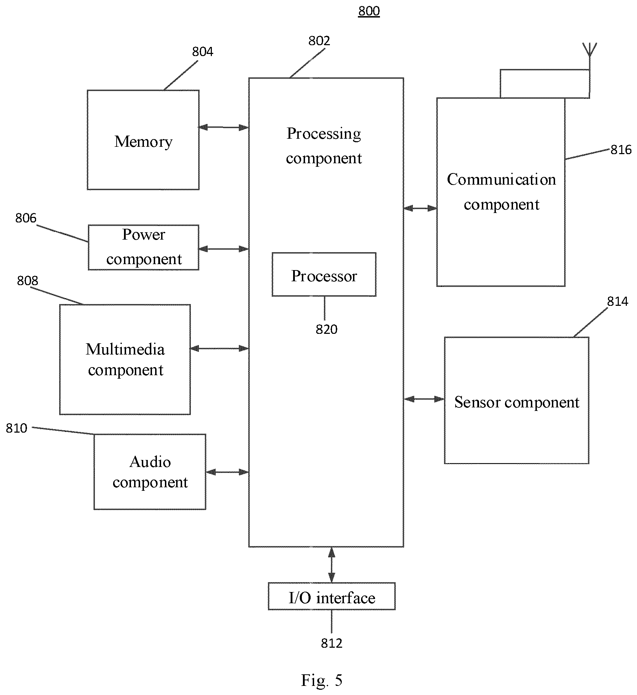

Fig. 5 is a block diagram illustrating electronic device 800 according to an example of the present disclosure. For example, the electronic device 800 may be a mobile phone, a computer, a digital broadcast terminal, a messaging device, a gaming console, a tablet, a medical device, exercise equipment, a personal digital assistant and the like.

Referring to Fig. 5, the electronic device 800 may include one or more components as follows: a processing component 802, a memory 804, a power component 806, a multimedia component 808, an audio component 810, an Input/Output (I/O) interface 812, a sensor component 814 and a communication component 816.

The processing component 802 typically controls overall operations of the electronic device 800, such as operations associated with display, telephone calls, data communications, camera operations and recording operations. The processing component 802 may include one or a plurality of processors 820 to execute instructions to complete all or part of the steps of the method for processing information described above. In addition, the processing component 802 may include one or a plurality of modules to facilitate the interaction between the processing component 802 and other components. For example, the processing component 802 may include a multimedia module to facilitate the interaction between the multimedia component 808 and the processing component 802.

The memory 804 is configured to store various data to support operations at the electronic device 800. Examples of such data include instructions for any applications or methods operated on the electronic device 800, contact data, phonebook data, messages, pictures, video, etc. The memory 804 may be implemented by any type of volatile or non-volatile memory devices or combinations thereof, such as a Static Random Access Memory (SRAM), an Electrically Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk or a compact disk.

The power component 806 provides power to various components of the electronic device 800. The power component 806 may include a power management system, one or more power sources, and any other components associated with the generation, management and distribution of power for the electronic device 800.

The multimedia component 808 includes a screen providing an output interface between the electronic device 800 and a user. In some examples, the screen may include liquid crystal display (LCD) and a touch panel (TP). If the screen includes the TP, the screen may be implemented as a touch screen to receive an input signal from a user. The touch panel includes one or more touch sensors to sense touch, swiping, and gestures on the touch panel. The touch sensors may not only sense a boundary of a touch or swipe action, but also detect duration and pressure related to the touch or swipe operation. In some examples, the multimedia component 808 includes a front camera and/or a rear camera. The front camera and/or the rear camera may receive external multimedia data when the electronic device 800 is in an operation mode, such as a photographing mode or a video mode. Each front camera and each rear camera may be fixed optical lens systems or may have focal lengths and optical zoom capabilities.

The audio component 810 is configured to output and/or input audio signals. For example, the audio component 810 includes a Microphone (MIC) configured to receive an external audio signal when the electronic device 800 is in an operation mode, such as a call mode, a recording mode and a voice recognition mode. The received audio signals may be further stored in the memory 804 or sent via the communication component 816. In some examples, the audio component 810 further includes a speaker configured to output audio signals.

The I/O interface 812 provides an interface between the processing component 802 and peripheral interface modules, such as a keyboard, a click wheel, buttons and the like. These buttons may include, but not limited to: a home button, a volume button, a start button and a lock button.

The sensor component 814 includes one or more sensors configured to provide status assessments of various aspects of the electronic device 800. For example, the sensor component 814 may detect an opened/closed state of the electronic device 800 and the relative positioning of the components such as a display and a keypad of the electronic device 800, and the sensor component 814 may also detect the position change of the electronic device 800 or a component of the electronic device 800, the presence or absence of contact between a user and the electronic device 800, the orientation or acceleration/deceleration of the electronic device 800 and the temperature change of the electronic device 800. The sensor component 814 may include a proximity sensor configured to detect the existence of nearby objects under the situation of no physical contact. The sensor component 814 may also include an optical sensor, such as a CMOS or CCD image sensor, for use in an imaging application. In some examples, the sensor component 814 may further include an acceleration sensor, a gyroscope sensor, a magnetic sensor, a pressure sensor or a temperature sensor.

The communication component 816 is configured to facilitate wired or wireless communication between the electronic device 800 and other devices. The electronic device 800 may access to a wireless network based on a communication standard, such as WiFi, 2G or 3G, 4G/LTE, 5G/NR or combinations thereof. In one example, the communication component 816 receives broadcast signals or broadcast related information from an external broadcast management system via a broadcast channel. In one example, the communication component 816 further includes a Near Field Communication (NFC) module to facilitate short-range communications. For example, the NFC module can be implemented based on a Radio Frequency Identification (RFID) technology, an Infrared Data Association (IrDA) technology, an Ultra-Wideband (UWB) technology, a Bluetooth (BT) technology and other technologies.

In some examples, the electronic device 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic elements, for executing the above-described method for processing information.

In some examples, a non-transitory computer readable storage medium including instructions is further provided, such as the memory 804 including the instructions, executable by the processor 820 in the electronic device 800, for completing the above-described method for processing information. For example, the non-transitory computer readable storage medium may be a Read Only Memory (ROM), a Random Access Memory (RAM), a Compact Disc Read Only Memory (CD-ROM), a magnetic tape, a floppy disk, an optical data storage device and the like.

In another example, a computer program product is further provided and comprises a computer program executable by a programmable device, and the computer program has code portions configured to execute the above-described method for processing information when executed by the programmable device.

In summary, the specified number of normalization structures in the preset model are gradually removed according to the target probability or the number of the steps for training the preset model so as to acquire the processing model, so that the training of the preset model is not interfered, the training stability of the preset model is high, the quality of the processing model can be ensured, and the accuracy of target information is improved.

**Claims**

1. A computer implemented information processing method, comprising:

   acquiring (101) to-be-processed information, wherein the to-be-processed information is an image; and
   taking (102) the to-be-processed information as an input of a processing model to acquire target information that is corresponding to the to-be-processed information and is output by the processing model, wherein the processing model is acquired by training a preset model, and the target information reflects specified features comprised in the to-be-processed information; wherein
   the preset model comprises a plurality of operation modules and a plurality of normalization structures, wherein one of the plurality of normalization structures corresponds to one of the plurality of operation modules, and each of the normalization structure is configured to normalize an output of the corresponding operation module; and the processing model is acquired by removing a specified number of normalization structures according to a target probability or a number of steps for training the preset model in a process of training the preset model, wherein the specified number represents a number of normalization structures removed;
wherein the preset model comprises an encoder and a decoder, the encoder comprises a second number of operation modules, and the decoder comprises a third number of operation modules; and the operation modules comprise attention networks or feedforward neural networks, the normalization structures are layer normalization structures;
wherein training the preset model to acquire the processing model further comprises:

   acquiring (201) a training sample set, wherein the training sample set comprises a plurality of groups of training data, each group of training data comprises: input end training data and corresponding output end training data, the input end training data comprises first training information, and the output end training data comprises second training information corresponding to the first training information; and
   training (202) the preset model by using the training sample set according to the target probability or a number of the steps for training the preset model to acquire the processing model;
   wherein training (202) the preset model by using the training sample set according to the target probability or the number of the steps for training the preset model to acquire the processing model further comprises:

      selecting and removing (2021) a first number of normalization structures from the plurality of normalization structures comprised in the preset model according to the target probability;
      training (2022) the preset model with the first number of normalization structures removed according to the training sample set;
      updating (2023) the target probability, wherein the updated target probability is greater than the target probability before updating; and
      repeatedly executing the step of selecting and removing (2021) the first number of normalization structures from the plurality of normalization structures comprised in the preset model according to the target probability to the step of updating (2023) the target probability until the specified number of normalization structures are removed, so as to acquire the processing model; alternatively, training (202) the preset model by using the training sample set according to the target probability or the number of the steps for training the preset model to acquire the processing model further comprises:

training the preset model through a preset training step according to the training sample set and the number of the steps for training the preset model until the specified number of normalization structures are removed to acquire the processing model, wherein a number of the normalization structures to be removed is gradually increased along with the increase of the number of the steps for training the preset model until the specified number of normalization structures are removed to acquire the processing model.

2. The method according to claim 1, wherein updating (2023) the target probability further comprises:

updating the target probability according to a preset proportionality coefficient; or
updating the target probability according to a preset function.

3. The method according to claim 1 or 2, wherein the preset training step comprises:

in response to determining that the number of the steps for training the preset model according to the training sample set is N, determining a target variance according to N, wherein N is a natural number, $var = \sqrt{N}$ , var is the target variance;
for each operation module, determining whether to remove the normalization structure corresponding to the operation module according to a current variance output by the current operation module and the target variance; if the variance output by the operation module is less than or equal to the target variance, removing the normalization structure corresponding to the operation module; and if the variance output by the operation module is greater than the target variance, reserving the normalization structure corresponding to the operation module.

4. An electronic device (800), comprising:

a processor (820); and
a memory (804) configured to store executable instructions of the processor (820); wherein the processor (820) is configured to operate the executable instructions so as to implement a computer implemented information processing method comprising:

acquiring to-be-processed information, wherein the to-be-processed information is an image; and
taking the to-be-processed information as an input of a processing model to acquire target information that is corresponding to the to-be-processed information and is output by the processing model, wherein the processing model is acquired by training a preset model, and the target information reflects specified features comprised in the to-be-processed information; wherein, the preset model comprises a plurality of operation modules and a plurality of normalization structures, wherein one of the plurality of normalization structures corresponds to one of the plurality of operation modules, and each of the normalization structure is configured to normalize an output of the corresponding operation module; and the processing model is acquired by removing a specified number of normalization structures according to a target probability or a number of steps for training the preset model in a process of training the preset model, wherein the specified number represents a number of normalization structures removed;
wherein the preset model comprises an encoder and a decoder, the encoder comprises a second number of operation modules, and the decoder comprises a third number of operation modules; and the operation modules comprise attention networks or feedforward neural networks, the normalization structures are layer normalization structures;
wherein the processor (820) is configured to train the preset model to acquire the processing model by:

acquiring a training sample set, wherein the training sample set comprises a plurality of groups of training data, each group of training data comprises: input end training data and corresponding output end training data, the input end training data comprises first training information, and the output end training data comprises second training information corresponding to the first training information; and

training the preset model by using the training sample set according to the target probability or a number of the steps for training the preset model to acquire the processing model;

wherein the processor (820) is configured to train the preset model by:

selecting and removing a first number of normalization structures from the plurality of normalization structures comprised in the preset model according to the target probability;

training the preset model with the first number of normalization structures removed according to the training sample set;

updating the target probability, wherein the updated target probability is greater than the target probability before updating; and

repeatedly executing the step of selecting and removing the first number of normalization structures from the plurality of normalization structures comprised in the preset model according to the target probability to the step of updating the target probability until the specified number of normalization structures are removed, so as to acquire the processing model;

alternatively, the processor (820) is configured to train the preset model by:

training the preset model through a preset training step according to the training sample set and the number of the steps for training the preset model until the specified number of normalization structures are removed to acquire the processing model, wherein a number of the normalization structures to be removed is gradually increased along with the increase of the number of the steps for training the preset model until the specified number of normalization structures are removed to acquire the processing model.

5. The electronic device (800) according to claim 4, wherein the processor (820) is configured to update the target probability by:

updating the target probability according to a preset proportionality coefficient; or

updating the target probability according to a preset function.

6. The electronic device (800) according to claim 4 or 5, wherein the preset training step comprises:

in response to determining that the number of the steps for training the preset model according to the training sample set is N, determining a target variance according to N, wherein N is a natural number, $\mathrm{var} = \sqrt{\mathrm{N}}$, var is the target variance;

for each operation module, determining whether to remove the normalization structure corresponding to the operation module according to a current variance output by the current operation module and the target variance; if the variance output by the operation module is less than or equal to the target variance, removing the normalization structure corresponding to the operation module; and if the variance output by the operation module is greater than the target variance, reserving the normalization structure corresponding to the operation module.

7. A non-transitory computer readable storage medium, storing computer program instructions thereon, wherein the program instructions, when executed by a processor, implement a computer implemented information processing method according to any of claims 1-3.

8. A computer program product, comprising a computer program executable by a programmable device, wherein the computer program has code portions configured to execute a computer implemented information processing method according to any of claims 1-3 when executed by the programmable device.

**Patentansprüche**

1. Computerimplementiertes Informationsverarbeitungsverfahren, das umfasst:

Erfassen (101) von zu verarbeitenden Informationen, wobei die zu verarbeitenden Informationen ein Bild sind; und

Verwenden (102) der zu verarbeitenden Informationen als eine Eingabe eines Verarbeitungsmodells, um Zielinformationen zu erfassen, die den zu verarbeitenden Informationen entsprechen und von dem Verarbeitungsmodell ausgegeben werden, wobei das Verarbeitungsmodell durch Trainieren eines vorgegebenen Modells erhalten wird und die Zielinformationen spezifizierte Merkmale widerspiegeln, die in den zu verarbeitenden Informationen enthalten sind; wobei

das vorgegebene Modell eine Vielzahl von Betriebsmodulen und eine Vielzahl von Normalisierungsstrukturen aufweist, wobei eine der Vielzahl von Normalisierungsstrukturen einem der Vielzahl von Betriebsmodulen entspricht und jede der Normalisierungsstrukturen konfiguriert ist, um eine Ausgabe des entsprechenden Betriebsmoduls zu normalisieren; und wobei das Verarbeitungsmodell durch Entfernen einer spezifizierten Anzahl von Normalisierungsstrukturen gemäß einer Zielwahrscheinlichkeit oder einer Anzahl von Schritten zum Trainieren des vorgegebenen Modells in einem Prozess des Trainings des vorgegebenen Modells erhalten wird, wobei die spezifizierte Anzahl eine Anzahl von entfernten Normalisierungsstrukturen darstellt;

wobei das vorgegebene Modell einen Encoder und einen Decoder aufweist, der Encoder eine zweite Anzahl von Betriebsmodulen aufweist und der Decoder eine dritte Anzahl von Betriebsmodulen aufweist; und wobei die Betriebsmodule Attention-Netzwerke oder neuronale Feedforward-Netzwerke umfassen, wobei die Normalisierungsstrukturen Schichtnormalisierungsstrukturen sind;

wobei das Training des vorgegebenen Modells zum Erhalten des Verarbeitungsmodells ferner umfasst:

Erfassen (201) eines Trainingsprobensatzes, wobei der Trainingsprobensatz eine Vielzahl von Gruppen von Trainingsdaten umfasst, wobei jede Gruppe von Trainingsdaten umfasst: Eingangsende-Trainingsdaten und entsprechende Ausgangsende-Trainingsdaten, wobei die Eingangsende-Trainingsdaten erste Trainingsinformationen umfassen, und die Ausgangsende-Trainingsdaten zweite Trainingsinformationen umfassen, die den ersten Trainingsinformationen entsprechen; und

Trainieren (202) des vorgegebenen Modells unter Verwendung des Trainingsprobensatzes entsprechend der Zielwahrscheinlichkeit oder einer Anzahl der Schritte zum Trainieren des vorgegebenen Modells, um das Verarbeitungsmodell zu erhalten;

wobei das Trainieren (202) des vorgegebenen Modells unter Verwendung des Trainingsprobensatzes entsprechend der Zielwahrscheinlichkeit oder der Anzahl der Schritte zum Trainieren des vorgegebenen Modells, um das Verarbeitungsmodell zu erhalten, ferner umfasst:

Auswählen und Entfernen (2021) einer ersten Anzahl von Normalisierungsstrukturen aus der Vielzahl von Normalisierungsstrukturen, die in dem vorgegebenen Modell enthalten sind, gemäß der Zielwahrscheinlichkeit;

Trainieren (2022) des vorgegebenen Modells, wobei die erste Anzahl von Normalisierungsstrukturen entsprechend dem Trainingsprobensatz entfernt wird;

Aktualisieren (2023) der Zielwahrscheinlichkeit, wobei die aktualisierte Zielwahrscheinlichkeit größer ist als die Zielwahrscheinlichkeit vor dem Aktualisieren; und

wiederholtes Ausführen des Schritts des Auswählens und Entfernens (2021) der ersten Anzahl von Normalisierungsstrukturen aus der Vielzahl von Normalisierungsstrukturen, die in dem vorgegebenen Modell enthalten sind, gemäß der Zielwahrscheinlichkeit bis zum Schritt des Aktualisierens (2023) der Zielwahrscheinlichkeit, bis die spezifizierte Anzahl von Normalisierungsstrukturen entfernt ist, um so das Verarbeitungsmodell zu erhalten;

wobei das Trainieren (202) des vorgegebenen Modells unter Verwendung des Trainingsprobensatzes entsprechend der Zielwahrscheinlichkeit oder der Anzahl der Schritte zum Trainieren des vorgegebenen Modells, um das Verarbeitungsmodell zu erhalten, alternativ ferner umfasst:

Trainieren des vorgegebenen Modells durch einen vorgegebenen Trainingsschritt gemäß dem Trainingsprobensatz und der Anzahl der Schritte zum Trainieren des vorgegebenen Modells, bis die spezifizierte Anzahl von Normalisierungsstrukturen entfernt ist, um das Verarbeitungsmodell zu erhalten, wobei eine Anzahl der zu entfernenden Normalisierungsstrukturen allmählich zusammen mit der Erhöhung der Anzahl der Schritte zum Trainieren des vorgegebenen Modells erhöht wird, bis die spezifizierte Anzahl von Normalisierungsstrukturen entfernt ist, um das Verarbeitungsmodell zu erhalten.

**2.** Verfahren nach Anspruch 1, wobei das Aktualisieren (2023) der Zielwahrscheinlichkeit ferner umfasst:

Aktualisieren der Zielwahrscheinlichkeit entsprechend einem vorgegebenen Proportionalitätskoeffizienten; oder
Aktualisieren der Zielwahrscheinlichkeit entsprechend einem vorgegebenen Funktion.

**3.** Verfahren nach Anspruch 1 oder 2, wobei der vorgegebene Trainingsschritt umfasst:

als Reaktion auf das Bestimmen, dass die Anzahl der Schritte zum Trainieren des vorgegebenen Modells gemäß dem Trainingsprobensatz N ist, Bestimmen einer Zielvarianz gemäß N, wobei N eine natürliche Zahl ist,

$$\mathrm{var} = \sqrt{N}$$

, wobei var die Zielvarianz ist; für jedes Betriebsmodul, Bestimmen, ob die dem Betriebsmodul entsprechende Normalisierungsstruktur gemäß einer aktuellen Varianzausgabe durch das aktuelle Betriebsmodul und der Zielvarianz zu entfernen ist; wenn die Varianzausgabe durch das Betriebsmodul kleiner oder gleich der Zielvarianz ist, Entfernen der dem Betriebsmodul entsprechenden Normalisierungsstruktur; und wenn die Varianzausgabe durch das Betriebsmodul größer als die Zielvarianz ist, Zurückbehalten der dem Betriebsmodul entsprechenden Normalisierungsstruktur.

**4.** Elektronische Vorrichtung (800), die aufweist:

einen Prozessor (820); und
einen Speicher (804), der dazu ausgebildet ist, ausführbare Anweisungen des Prozessors (820) zu speichern; wobei
der Prozessor (820) so ausgebildet ist, dass er die ausführbaren Anweisungen verarbeitet, um ein computerimplementiertes Informationsverarbeitungsverfahren zu implementieren, das umfasst:

Erfassen von zu verarbeitenden Informationen, wobei die zu verarbeitenden Informationen ein Bild sind; und
Verwenden der zu verarbeitenden Informationen als eine Eingabe eines Verarbeitungsmodells, um Zielinformationen zu erfassen, die den zu verarbeitenden Informationen entsprechen und von dem Verarbeitungsmodell ausgegeben werden, wobei das Verarbeitungsmodell durch Trainieren eines vorgegebenen Modells erhalten wird und die Zielinformationen spezifizierte Merkmale widerspiegeln, die in den zu verarbeitenden Informationen enthalten sind; wobei das vorgegebene Modell eine Vielzahl von Betriebsmodulen und eine Vielzahl von Normalisierungsstrukturen aufweist, wobei eine der Vielzahl von Normalisierungsstrukturen einem der Vielzahl von Betriebsmodulen entspricht und jede der Normalisierungsstrukturen konfiguriert ist, um eine Ausgabe des entsprechenden Betriebsmoduls zu normalisieren; und wobei das Verarbeitungsmodell durch Entfernen einer spezifizierten Anzahl von Normalisierungsstrukturen gemäß einer Zielwahrscheinlichkeit oder einer Anzahl von Schritten zum Trainieren des vorgegebenen Modells in einem Prozess des Trainings des vorgegebenen Modells erhalten wird, wobei die spezifizierte Anzahl eine Anzahl von entfernten Normalisierungsstrukturen darstellt;
wobei das vorgegebene Modell einen Encoder und einen Decoder aufweist, der Encoder eine zweite Anzahl von Betriebsmodulen aufweist und der Decoder eine dritte Anzahl von Betriebsmodulen aufweist; und wobei die Betriebsmodule Attention-Netzwerke oder neuronale Feedforward-Netzwerke umfassen, wobei die Normalisierungsstrukturen Schichtnormalisierungsstrukturen sind;
wobei der Prozessor (820) dazu ausgebildet ist, das voreingestellte Modell zu trainieren, um das Verarbeitungsmodell zu erhalten, durch:

Erfassen eines Trainingsprobensatzes, wobei der Trainingsprobensatz eine Vielzahl von Gruppen von Trainingsdaten umfasst, wobei jede Gruppe von Trainingsdaten umfasst: Eingangsende-Trainingsdaten und entsprechende Ausgangsende-Trainingsdaten, wobei die Eingangsende-Trainingsdaten erste Trainingsinformationen umfassen, und die Ausgangsende-Trainingsdaten zweite Trainingsinformationen umfassen, die den ersten Trainingsinformationen entsprechen; und
Trainieren des vorgegebenen Modells unter Verwendung des Trainingsprobensatzes entsprechend der Zielwahrscheinlichkeit oder einer Anzahl der Schritte zum Trainieren des vorgegebenen Modells, um das Verarbeitungsmodell zu erhalten;
wobei der Prozessor (820) dazu ausgebildet ist, das voreingestellte Modell zu trainieren durch:

Auswählen und Entfernen einer ersten Anzahl von Normalisierungsstrukturen aus der Vielzahl von Normalisierungsstrukturen, die in dem vorgegebenen Modell enthalten sind, gemäß der Zielwahrscheinlichkeit;

Trainieren des vorgegebenen Modells, wobei die erste Anzahl von Normalisierungsstrukturen entsprechend dem Trainingsprobensatz entfernt wird;

Aktualisieren der Zielwahrscheinlichkeit, wobei die aktualisierte Zielwahrscheinlichkeit größer ist als die Zielwahrscheinlichkeit vor dem Aktualisieren; und

wiederholtes Ausführen des Schritts des Auswählens und Entfernens der ersten Anzahl von Normalisierungsstrukturen aus der Vielzahl von Normalisierungsstrukturen, die in dem vorgegebenen Modell enthalten sind, gemäß der Zielwahrscheinlichkeit bis zum Schritt des Aktualisierens der Zielwahrscheinlichkeit, bis die spezifizierte Anzahl von Normalisierungsstrukturen entfernt ist, um so das Verarbeitungsmodell zu erhalten;

wobei der Prozessor (820) alternativ dazu ausgebildet ist, das voreingestellte Modell zu trainieren durch:

Trainieren des vorgegebenen Modells durch einen vorgegebenen Trainingsschritt gemäß dem Trainingsprobensatz und der Anzahl der Schritte zum Trainieren des vorgegebenen Modells, bis die spezifizierte Anzahl von Normalisierungsstrukturen entfernt ist, um das Verarbeitungsmodell zu erhalten, wobei eine Anzahl der zu entfernenden Normalisierungsstrukturen allmählich zusammen mit der Erhöhung der Anzahl der Schritte zum Trainieren des vorgegebenen Modells erhöht wird, bis die spezifizierte Anzahl von Normalisierungsstrukturen entfernt ist, um das Verarbeitungsmodell zu erhalten.

5. Elektronische Vorrichtung (800) nach Anspruch 4, wobei der Prozessor (820) dazu ausgebildet ist, die Zielwahrscheinlichkeit zu aktualisieren durch:

Aktualisieren der Zielwahrscheinlichkeit entsprechend einem vorgegebenen Proportionalitätskoeffizienten; oder
Aktualisieren der Zielwahrscheinlichkeit entsprechend einer vorgegebenen Funktion.

6. Elektronische Vorrichtung (800) nach Anspruch 4 oder 5, wobei der vorgegebene Trainingsschritt umfasst:

als Reaktion auf das Bestimmen, dass die Anzahl der Schritte zum Trainieren des vorgegebenen Modells gemäß dem Trainingsprobensatz N ist, Bestimmen einer Zielvarianz gemäß N, wobei N eine natürliche Zahl ist,

$$\mathrm{var} = \sqrt{N}$$

, wobei var die Zielvarianz ist;
für jedes Betriebsmodul, Bestimmen, ob die dem Betriebsmodul entsprechende Normalisierungsstruktur gemäß einer aktuellen Varianzausgabe durch das aktuelle Betriebsmodul und der Zielvarianz zu entfernen ist; wenn die Varianzausgabe durch das Betriebsmodul kleiner oder gleich der Zielvarianz ist, Entfernen der dem Betriebsmodul entsprechenden Normalisierungsstruktur; und wenn die Varianzausgabe durch das Betriebsmodul größer als die Zielvarianz ist, Zurückbehalten der dem Betriebsmodul entsprechenden Normalisierungsstruktur.

7. Nicht-transitorisches, computerlesbares Speichermedium, auf dem Computerprogrammanweisungen gespeichert sind, wobei die Programmanweisungen bei Ausführung durch einen Prozessor ein computerimplementiertes Informationsverarbeitungsverfahren nach einem der Ansprüche 1-3 implementieren.

8. Computerprogrammprodukt, das ein von einer programmierbaren Vorrichtung ausführbares Computerprogramm umfasst, wobei das Computerprogramm Codeteile aufweist, die so ausgebildet sind, dass sie ein computerimplementiertes Informationsverarbeitungsverfahren nach einem der Ansprüche 1 bis 3 ausführen, wenn sie von der programmierbaren Vorrichtung ausgeführt werden.

**Revendications**

1. Procédé de traitement d'informations mis en œuvre par ordinateur, comprenant les étapes consistant à :

acquérir (101) des informations à traiter, dans lequel les informations à traiter sont une image ; et

prendre (102) les informations à traiter en tant qu'entrée d'un modèle de traitement pour acquérir des informations cibles qui correspondent aux informations à traiter et qui sont délivrées par le modèle de traitement, dans lequel le modèle de traitement est acquis par un entraînement d'un modèle prédéfini, et les informations cibles reflètent des caractéristiques spécifiées comprises dans les informations à traiter ; dans lequel

le modèle prédéfini comprend une pluralité de modules d'opération et une pluralité de structures de normalisation, dans lequel une structure de la pluralité de structures de normalisation correspond à un module de la pluralité de modules d'opération, et chacune des structures de normalisation est configurée pour normaliser une sortie du module d'opération correspondant ; et le modèle de traitement est acquis en retirant un nombre spécifié de structures de normalisation conformément à une probabilité cible ou à un nombre d'étapes d'entraînement du modèle prédéfini d'un processus d'entraînement du modèle prédéfini, dans lequel le nombre spécifié représente un nombre de structures de normalisation retirées ;

dans lequel le modèle prédéfini comprend un codeur et un décodeur, le codeur comprend un deuxième nombre de modules d'opération, et le décodeur comprend un troisième nombre de modules d'opération ; et les modules d'opération comprennent des réseaux d'attention ou des réseaux de neurones à propagation avant, les structures de normalisation sont des structures de normalisation de couche ;

dans lequel l'entraînement du modèle prédéfini pour acquérir le modèle de traitement comprend en outre les étapes consistant à :

acquérir (201) un ensemble d'échantillons d'entraînement, dans lequel l'ensemble d'échantillons d'entraînement comprend une pluralité de groupes de données d'entraînement, chaque groupe de données d'entraînement comprend : des données d'entraînement d'extrémité d'entrée et des données d'entraînement d'extrémité de sortie correspondantes, les données d'entraînement d'extrémité d'entrée comprennent des premières informations d'entraînement, et les données d'entraînement d'extrémité de sortie comprennent des secondes informations d'entraînement correspondant aux premières informations d'entraînement ; et

entraîner (202) le modèle prédéfini en utilisant l'ensemble d'échantillons d'entraînement conformément à la probabilité cible ou à un nombre des étapes d'entraînement du modèle prédéfini pour acquérir le modèle de traitement ;

dans lequel l'étape d'entraînement (202) du modèle prédéfini en utilisant l'ensemble d'échantillons d'entraînement conformément à la probabilité cible ou au nombre des étapes d'entraînement du modèle prédéfini pour acquérir le modèle de traitement comprend en outre les étapes consistant à :

sélectionner et retirer (2021) un premier nombre de structures de normalisation de la pluralité de structures de normalisation comprises dans le modèle prédéfini conformément à la probabilité cible ;

entraîner (2022) le modèle prédéfini avec le premier nombre de structures de normalisation retirées conformément à l'ensemble d'échantillons d'entraînement ;

mettre à jour (2023) la probabilité cible, dans lequel la probabilité cible mise à jour est supérieure à la probabilité cible avant la mise à jour ; et

exécuter de manière répétée l'étape de sélection et de retrait (2021) du premier nombre de structures de normalisation de la pluralité de structures de normalisation comprises dans le modèle prédéfini conformément à la probabilité cible à l'étape de mise à jour (2023) de la probabilité cible jusqu'à ce que les structures du nombre spécifié de structures de normalisation soient retirées, de façon à acquérir le modèle de traitement ;

comme variante, l'étape d'entraînement (202) du modèle prédéfini au moyen de l'ensemble d'échantillons d'entraînement conformément à la probabilité cible ou au nombre des étapes d'entraînement du modèle prédéfini pour acquérir le modèle de traitement consiste en outre à :

entraîner le modèle prédéfini par l'intermédiaire d'une étape d'entraînement prédéfinie conformément à l'ensemble d'échantillons d'entraînement et au nombre des étapes d'entraînement du modèle prédéfini jusqu'à ce que les structures du nombre spécifié de structures de normalisation soient retirées pour acquérir le modèle de traitement, dans lequel un nombre des structures de normalisation à retirer va en augmentant graduellement avec l'augmentation du nombre des étapes d'entraînement du modèle prédéfini jusqu'à ce que les structures du nombre spécifié de structures de normalisation soient retirées pour acquérir le modèle de traitement.

2. Procédé selon la revendication 1, dans lequel l'étape de mise à jour (2023) de la probabilité cible consiste en outre à :

mettre à jour la probabilité cible conformément à un coefficient de proportionnalité prédéfini ; ou mettre à jour la probabilité cible conformément à une fonction prédéfinie.

3. Procédé selon la revendication 1 ou la revendication 2, dans lequel l'étape d'entraînement prédéfini consiste à :

en réponse à la détermination du fait que le nombre des étapes d'entraînement du modèle prédéfini conformément à l'ensemble d'échantillons d'entraînement est N, déterminer une variance cible conformément à N, dans lequel N est un nombre naturel, $var = \sqrt{N}$, var est la variance cible ;
pour chaque module d'opération, déterminer s'il convient de retirer la structure de normalisation correspondant au module d'opération conformément à une variance courante délivrée par le module d'opération courant et à la variance cible ; si la variance délivrée par le module d'opération est inférieure ou égale à la variance cible, retirer la structure de normalisation correspondant au module d'opération ; et si la variance délivrée par le module d'opération est supérieure à la variance cible, réserver la structure de normalisation correspondant au module d'opération.

4. Dispositif électronique (800), comprenant :

un processeur (820) ; et
une mémoire (804) configurée pour maintenir des instructions exécutables du processeur (820) ; dans lequel le processeur (820) est configuré pour exécuter les instructions exécutables de façon à mettre en œuvre un procédé de traitement d'informations mis en œuvre par ordinateur comprenant les étapes consistant à :

acquérir des informations à traiter, dans lequel les informations à traiter sont une image ; et
prendre les informations à traiter en tant qu'entrée d'un modèle de traitement pour acquérir des informations cibles qui correspondent aux informations à traiter et qui sont délivrées par le modèle de traitement, dans lequel le modèle de traitement est acquis par un entraînement d'un modèle prédéfini, et les informations cibles reflètent des caractéristiques spécifiées comprises dans les informations à traiter ; dans lequel le modèle prédéfini comprend une pluralité de modules d'opération et une pluralité de structures de normalisation, dans lequel une structure de la pluralité de structures de normalisation correspond à un module de la pluralité de modules d'opération, et chacune des structures de normalisation est configurée pour normaliser une sortie du module d'opération correspondant ; et le modèle de traitement est acquis en retirant un nombre spécifié de structures de normalisation conformément à une probabilité cible ou à un nombre d'étapes d'entraînement du modèle prédéfini d'un processus d'entraînement du modèle prédéfini, dans lequel le nombre spécifié représente un nombre de structures de normalisation retirées ;
dans lequel le modèle prédéfini comprend un codeur et un décodeur, le codeur comprend un deuxième nombre de modules d'opération, et le décodeur comprend un troisième nombre de modules d'opération ; et les modules d'opération comprennent des réseaux d'attention ou des réseaux de neurones à propagation avant, les structures de normalisation sont des structures de normalisation de couche ;
dans lequel le processeur (820) est configuré pour entraîner le modèle prédéfini pour acquérir le modèle de traitement par une exécution des étapes consistant à :

acquérir un ensemble d'échantillons d'entraînement, dans lequel l'ensemble d'échantillons d'entraînement comprend une pluralité de groupes de données d'entraînement, chaque groupe de données d'entraînement comprend : des données d'entraînement d'extrémité d'entrée et des données d'entraînement d'extrémité de sortie correspondantes, les données d'entraînement d'extrémité d'entrée comprennent des premières informations d'entraînement, et les données d'entraînement d'extrémité de sortie comprennent des secondes informations d'entraînement correspondant aux premières informations d'entraînement ; et

entraîner le modèle prédéfini en utilisant l'ensemble d'échantillons d'entraînement conformément à la probabilité cible ou à un nombre des étapes d'entraînement du modèle prédéfini pour acquérir le modèle de traitement ;

dans lequel le processeur (820) est configuré pour entraîner le modèle prédéfini par une exécution des étapes consistant à :

sélectionner et retirer un premier nombre de structures de normalisation de la pluralité de structures de normalisation comprises dans le modèle prédéfini conformément à la probabilité cible ;

entraîner le modèle prédéfini avec le premier nombre de structures de normalisation retirées conformément à l'ensemble d'échantillons d'entraînement ;

mettre à jour la probabilité cible, dans lequel la probabilité cible mise à jour est supérieure à la probabilité cible avant la mise à jour ; et

exécuter de manière répétée l'étape de sélection et de retrait du premier nombre de structures de normalisation de la pluralité de structures de normalisation comprises dans le modèle prédéfini conformément à la probabilité cible à l'étape de mise à jour de la probabilité cible jusqu'à ce que les structures du nombre spécifié de structures de normalisation soient retirées, de façon à acquérir le modèle de traitement ;

comme variante, le processeur (820) est configuré pour entraîner le modèle prédéfini par une exécution des étapes consistant à :

entraîner le modèle prédéfini par l'intermédiaire d'une étape d'entraînement prédéfinie conformément à l'ensemble d'échantillons d'entraînement et au nombre des étapes d'entraînement du modèle prédéfini jusqu'à ce que les structures du nombre spécifié de structures de normalisation soient retirées pour acquérir le modèle de traitement, dans lequel un nombre des structures de normalisation à retirer va en augmentant graduellement avec l'augmentation du nombre des étapes d'entraînement du modèle prédéfini jusqu'à ce que les structures du nombre spécifié de structures de normalisation soient retirées pour acquérir le modèle de traitement.

5. Dispositif électronique (800) selon la revendication 4, dans lequel le processeur (820) est configuré pour mettre à jour la probabilité cible par une exécution de l'étape consistant à :

mettre à jour la probabilité cible conformément à un coefficient de proportionnalité prédéfini ; ou mettre à jour la probabilité cible conformément à une fonction prédéfinie.

6. Dispositif électronique (800) selon la revendication 4 ou la revendication 5, dans lequel l'étape d'entraînement prédéfini consiste à :

en réponse à la détermination du fait que le nombre des étapes d'entraînement du modèle prédéfini conformément à l'ensemble d'échantillons d'entraînement est N, déterminer une variance cible conformément à N, dans lequel N est un nombre naturel, $var = \sqrt{N}$, var est la variance cible ;

pour chaque module d'opération, déterminer s'il convient de retirer la structure de normalisation correspondant au module d'opération conformément à une variance courante délivrée par le module d'opération courant et à la variance cible ; si la variance délivrée par le module d'opération est inférieure ou égale à la variance cible, retirer la structure de normalisation correspondant au module d'opération ; et si la variance délivrée par le module d'opération est supérieure à la variance cible, réserver la structure de normalisation correspondant au module d'opération.

7. Support d'informations non transitoire lisible par ordinateur, maintenant des instructions de programme informatique en son sein, dans lequel les instructions de programme, lorsqu'elles sont exécutées par un processeur, implémentent un procédé de traitement d'informations mis en œuvre par ordinateur selon l'une quelconque des revendications 1 à 3.

8. Produit-programme informatique, comprenant un programme informatique exécutable par un dispositif programmable, dans lequel le programme informatique comporte des parties de code configurées pour exécuter un procédé de traitement d'informations mis en œuvre par ordinateur selon l'une quelconque des revendications 1 à 3 lorsqu'il est exécuté par le dispositif programmable.

101

Acquire to-be-processed information

102

Take the to-be-processed information as an input of a processing model acquired by training a preset model so as to acquire target information corresponding to the to-be-processed information and output by the processing model

Fig. 1

201

Acquire a training sample set

202

Train a preset model by using the training sample set according to a target probability or the number of steps for training the preset model to acquire a processing model

Fig. 2

2021

Select and remove a first number of normalization structures from all normalization structures contained in a preset model according to a target probability

2022

Train the preset model with the first number of normalization structures removed according to a training sample set

2023

Update the target probability

Fig. 3

300

Apparatus for processing information

Acquisition module 301

Processing module 302

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019370658 A1, XIE BIKE

### Non-patent literature cited in the description

- Inpainting of Irregular Holes in a Manuscript using UNet and Partial Convolution. **KAUR AMREEN et al.** 2020 SECOND INTERNATIONAL CONFERENCE ON INVENTIVE RESEARCH IN COMPUTING APPLICATIONS (ICIRCA). IEEE, 15 July 2020, 778-784